# EUROPEAN PATENT APPLICATION

(11) **EP 1 962 510 A2**
(43) Date of publication of application: **27.08.2008**
(21) Application number: 07254981.9
(22) Date of filing: 20.12.2007
(51) Int. Cl.: H04N 7/24

(54) **Device, system and method for remotely processing multimedia stream**

(30) Priority: 20.12.2006 TW 95147915
(71) Applicant: ASUSTeK Computer Inc., Peitou,Taipei (TW)
(72) Inventor: Lu, Ching-Jan, Peitou (TW); Laing, Chih-Hao, Peitou (TW); Liao, Li-Hsiang, Peitou (TW)
(74) Representative: Chamberlain, Alan James

(57) **Abstract**

A device, a system and a method for remotely processing multimedia stream are disclosed. In the present invention, an instant communicating module is used for establishing a communication interface between a remote device and a stream operating device. An operating function for the multimedia stream is executed according to an operating command given by the remote device. Furthermore, a virtual capturing unit is used for converting the format of the multimedia stream into a specific streaming format supported by the instant communicating module. Finally, the processed multimedia stream is output to the remote device via the instant communicating module. Therefore, the present invention not only realizes the ideal of remotely receiving multimedia stream, but also provides various operating functions for multimedia stream, such that users may enjoy the pleasure of viewing or listening multimedia stream remotely at their will via instant communicating module.

## Description

### BACKGROUND OF THE INVENTION

### Field of the Invention

The invention relates to a device, a system and a method for processing multimedia stream and, more particularly, to a device, a system and a method for remotely processing multimedia stream.

### Description of the Related Art

With the continuous innovation of the multimedia stream processing technology, more and more products are related to the multimedia. Windows operating system developed by Microsoft provides various kinds of multimedia stream formats, and Directshow of the Microsoft DirectX provides strong support for capturing and playing the multimedia stream. Data can be captured from the video or audio capture device supporting the windows driver model (WDM) easily by Directshow, and corresponding latter multimedia data processing can be executed. Directshow widely supports various media formats including MPEG, AVI, MP3, WAVE and so on, so that reading and playing multimedia stream become easily.

To make re-usage more convenient, Windows operating system packages the operating functions such as playing, editing and transmitting of the multimedia stream to be Directshow filter (filter for short hereinbelow). The filter can be classified as source filter, transform filter, renderer filter, splitter filter, and mux filter and so on according to the functions thereof. Besides a series of normal filters provided by Directshow, a developer also can develop own filters to expand the range of application.

For example, conventional multimedia stream application software utilizes the source filter to read multimedia stream from a multimedia stream source, and utilizes the splitter filter to examine the header file of the multimedia stream to separate the video stream from the audio stream of the multimedia stream. Then, the decoder filter is chosen to decode the video stream according to the compression format of the multimedia stream. At least, the renderer filter is used to redraw the video image and transmit it to the graphic card to display, and audio device filter transmits the audio stream to the audio card to play.

From the above, each filter is linked to one or more than one filter, and multimedia stream is transmitted by called pin between two filters. Such a graph is called a filter graph. From another view, the filter can be viewed as an operating interface of the multimedia stream, while the filter graph describes the linkage relationship between each filter. Under this frame, a program developer only needs to add various existing filters to the filter graph and make a combination, and make them cooperate with the filter developed by self, needed application software can be developed.

Instant communicating software can be viewed as one kind of multimedia stream application software. With the development of the Internet and maturation of the information environment, using instant communicating software (such as Skype, MSN Messenger, Yahoo Messenger and so on) to transmit information has gradually become a manner for communicating in daily life. Instant communicating software can provide functions such as two sides talking, sharing video or audio, word communicating and so on. However, in the existing manner, if a user wants to use instant communicating software to make a video communication, interfaces of the video capture device and audio capture device must be chosen in advance, and then the transmission of video and audio stream can be done. This manner restricts the kind of the multimedia stream that can be used by the instant communicating software, and restricts the function that the instant communicating software can provide indirectly.

### BRIEF SUMMARY OF THE INVENTION

One objective of the invention is to provide a device for remotely processing multimedia stream, which executes corresponding operating functions for the multimedia stream and convert it to a specific streaming format supported by the instant communicating module according to the operating command received by the instant communicating module, so that the instant communicating module can be applied to more kinds of multimedia stream.

Another objective of the invention is to provide a system for remotely processing multimedia stream, which establishes a connection with a remote device and receives operating commands by an instant communicating module to control the stream operating device to execute operating functions and to achieve the objective of controlling the transmission of the multimedia stream remotely.

Another objective of the invention is to provide a method for remotely processing multimedia stream, which executes operating functions such as playing, pausing, fast forwarding and turning round and so on for a plurality of multimedia stream according to operating commands transmitted from the remote, and transmits it to the remote device via the instant communicating module after the format conversion to achieve the objective of remotely operating the multimedia stream function.

The invention provides a device for remotely processing multimedia stream including an instant communicating module, a first stream providing unit, an processing unit and a virtual capturing unit. The instant communicating module is used to establish a communicating connection with a remote device and receive operating commands transmitted by the remote device. The first stream providing unit is used to provide a first multimedia stream. The processing unit controls the stream providing unit to execute the operating functions such as playing, pausing, fast forwarding, turning round and so on according to the operating commands received by the instant communicating module. The virtual capturing unit is used to convert the format of the first multimedia stream to a specific streaming format that the instant communicating module corresponds to, and provide the converted first multimedia stream for the instant communicating module by which the converted first multimedia stream is outputted to the remote device.

The invention provides a system for remotely processing multimedia stream including a remote device and a stream operating device. The remote device transmits operating commands via a first instant communicating module. The stream operating device includes a second instant communicating module, a first stream providing unit, an processing unit and a virtual capturing unit. The second instant communicating module is used to establish a communicating connection with the first instant communication module of the remote device and receive operating commands transmitted by the first instant communicating module of the remote device. The first stream providing unit is used to provide first multimedia stream. The processing unit is used to receive operating commands from the second instant communicating module and control the first stream providing unit to execute operating functions according to the operating commands. The virtual capturing unit is used to convert the format of the first multimedia stream to a specific streaming format that the second instant communicating module corresponds to, and provide the converted first multimedia stream for the second instant communicating module by which the converted first multimedia stream is outputted to the remote device.

For the system for remotely processing multimedia stream according to one preferred embodiment of the invention, the remote device further includes a control unit for giving operating commands to the remote device, and the control unit is, for example, a remote controller.

The system for remotely processing multimedia stream according to one preferred embodiment of the invention further includes a second stream providing unit for providing second multimedia stream.

For the system for remotely processing multimedia stream according to one preferred embodiment of the invention, the processing unit further includes controlling the virtual capturing unit to execute operating functions such as format converting, mixing, editing and so on for the first and second multimedia stream.

The invention provides a method for remotely processing multimedia stream including the following steps: receiving an operating command transmitted by a remote device by an instant communicating module first, capturing first multimedia stream and executing operating functions such as playing, pausing, fast forwarding, turning round and so on for the first multimedia stream according to the operating command, and then converting the format of the first multimedia stream to a specific streaming format that the instant communicating module corresponds to, at last, outputting the first multimedia stream whose format is converted to the remote device via the instant communicating module.

The method for remotely processing multimedia stream of one preferred embodiment of the invention further includes establishing a communicating connection with the remote device via the instant communicating module before receiving the operating command transmitted by the remote device.

The method for remotely processing multimedia stream according to one preferred embodiment of the invention further includes receiving second multimedia stream, and executing operating functions such as format converting, mixing and editing and so on for the first and second multimedia stream.

For the device, system and method for remotely processing multimedia stream according to one preferred embodiment of the invention, the first multimedia stream is, for example, digital television stream, analog television stream, video stream, audio stream and so on. In addition, the specific streaming format has, for example, defined the image size, color and sampling rate of the first multimedia stream or the combination thereof and so on.

In the invention, the virtual capturing unit is utilized to convert the format of the multimedia stream to the format supported by the instant communicating module to make the multimedia stream that the instant communicating module can provide more plentiful. In addition, in the invention, operating functions such as mixing or editing are executed for a plurality of multimedia stream according to the operating command transmitted from the remote device, so that the plurality of multimedia stream can be transmitted to the instant communicating module as single multimedia stream and outputted to the remote device to play. Thus, objective of sharing various multimedia stream is achieved.

These and other features, aspects, and advantages of the present invention will become better understood with regard to the following description, appended claims, and accompanying drawings.

### BRIEF DESCRIPTION OF THE DRAWINGS

FIG. 1 is a block diagram showing a device for remotely processing multimedia stream according to one preferred embodiment of the invention.

FIG. 2 is a flowchart showing a method for remotely processing multimedia stream according to one preferred embodiment of the invention.

FIG. 3 is a block diagram showing an analog television capture card according to one preferred embodiment of the invention.

FIG. 4 is a block diagram showing a digital television capture card according to one preferred embodiment of the invention.

FIG. 5 shows a system for remotely processing multimedia stream according to one preferred embodiment of the invention.

FIG. 6 shows a system for remotely processing multimedia stream according to another preferred embodiment of the invention.

### DETAILED DESCRIPTION OF THE EMBODIMETNS

Instant communicating software can provide functions such as two sides talking, sharing video or audio, word communicating and so on. If the above stated restriction for the multimedia stream can be gotten rid of, and the communicating interface of the instant communicating software can be well used, advanced multimedia application such as remotely watching television, listening to music, remotely controlling or remotely monitoring and so on can be developed. The invention provides a device, system and method for remotely processing multimedia stream based on this idea. To make the content of the invention more clear, the following embodiment is described as an example.

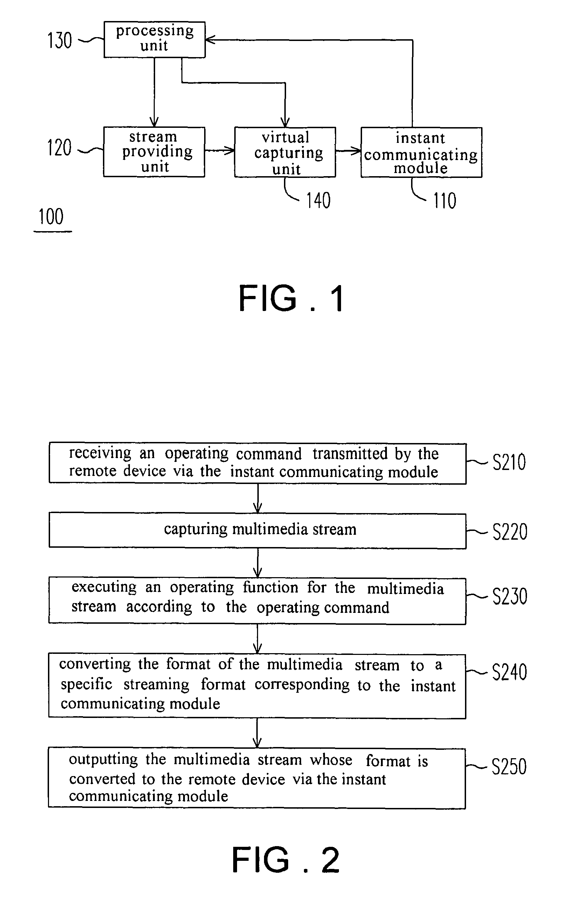

FIG. 1 is a block diagram showing a device for remotely processing multimedia stream according to one preferred embodiment of the invention. Please refer to FIG. 1. The device for remotely processing multimedia stream 100 includes an instant communicating module 110, a stream providing unit 120, an processing unit 130 and a virtual capturing unit 140.

The instant communicating module 110 is used to establish a communicating connection with a remote device (not shown), and receive an operating command transmitted by a remote device. After receiving the operating command, the instant communicating module 110 provides the operating command for the processing unit 130. In addition, the instant communicating module 110 also receives multimedia stream converted by the virtual capturing unit 140, and shares the multimedia stream with the remote device. Wherein the instant communicating module 110 is, for example, MSN Messenger, Yahoo Messenger or Skype and so on nowadays on the market commonly, which is not limited.

The stream providing unit 120 is used to provide a sum of multimedia stream for the virtual capturing unit 140, and execute operating functions such as playing, pausing, fast forwarding or turning round and so on for the multimedia stream. The stream providing unit 120 is, for example, television capture card or web cam and so on, while the multimedia stream is, for example, digital television stream, analog television stream, video stream, audio stream and so on. The kinds of the stream providing unit 120 and multimedia stream are not limited herein.

The processing unit 130 controls the stream providing unit 120 to execute the operating functions such as playing, pausing, fast forwarding, turning round and so on according to the operating command transmitted from the instant communicating module and given by the remote device. In addition, the processing unit 130 is also used to control the virtual capturing unit 140 to execute operating functions such as format converting, mixing, editing and so on for the multimedia stream.

The virtual capturing unit 140 is used to convert the format of the multimedia stream provided by the stream providing unit 120 to a specific streaming format such as video capture source or audio capture source that the instant communicating module 110 corresponds to. In other words, the specific streaming format is the format that can be "understood" by the instant communicating module 110. After the format is converted, the virtual capturing unit 140 transmits the converted multimedia stream to the instant communicating module 110 by which the converted multimedia stream is outputted to the remote device. The specific streaming format has, for example, defined the image size, color, sampling rate of the multimedia stream or the combination thereof and so on.

For example, if a user wants to remotely control the multimedia stream to fast forward, the user can transmit a fast forwarding command to the instant communicating module 110 by the remote device. At that moment, the instant communicating module 110 provides the fast forwarding command for the processing unit 130, and the processing unit 130 controls the stream providing unit 120 to execute the function of the fast forwarding for the multimedia stream.

The processing unit 130 also controls the virtual capturing unit 140 to covert the format of the movie to the specific streaming format supported by the instant communicating module 110. For example, if the instant communicating module 110 only can receive the multimedia stream with YUY2 format, and format of the multimedia stream provided by the stream providing unit 120 is RGB, the virtual capturing unit 140 converts the RGB format of the multimedia stream to be the YUY2 format, and provides the converted multimedia stream to the instant communicating module 110. In this way, the remote device can display the fast forwarding multimedia stream via the instant communicating module 110.

To make the content of the above embodiment clearer, a flowchart is taken for description. FIG. 2 is a flowchart showing a method for remotely processing multimedia stream according to one preferred embodiment of the invention. Please refer to FIG. 1 and FIG. 2. In the method, an operating command transmitted by the remote device is received via the instant communicating module 110 first (step S210), and the operating command is provided for the processing unit 130. In other words, after the remote device gives the operating command to the instant communicating module 110, the instant communicating module 110 does the subsequent operation according to the operating command.

Next multimedia stream is captured, (step S220) and the multimedia stream is, for example, television stream captured by a television capture card. Then, operating functions such as playing, pausing, fast forwarding and turning round can be executed for the multimedia stream according the operating command received by the instant communicating module 110 (step S230).

Then, the format of the multimedia stream can be converted to the specific streaming format that the instant communicating module 110 corresponds to (step S240), and the specific streaming format is, for example, video capture source format or audio capture source format, which is not limited. After the format is converted, the instant communicating module 110 can recognize the multimedia stream, and output the converted multimedia stream to the remote device (step S250).

Take the television stream for example. If the multimedia stream which needs to be transmitted is analog television stream, the device for remotely processing multimedia stream can utilize analog television capture card to capture analog television stream. Similarly, if the multimedia stream which needs to be transmitted is digital television stream, the device for remotely processing multimedia stream can utilize digital capture card to capture and provide digital television stream. The two situations are described with examples, respectively.

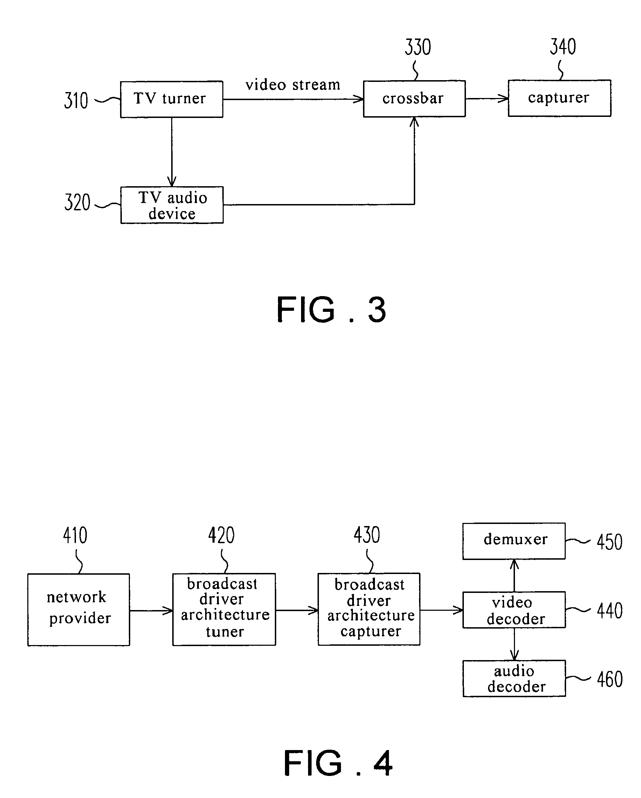

FIG. 3 is a block diagram showing the analog television capture card according to one preferred embodiment of the invention. Please refer to FIG. 3, if the instant communicating software is used to share the analog television stream, the part of the operating end must be composed of the filters provided by the analog television capture card and the virtual capturing unit. The analog television capture card must register the filters such as a television turner 310, a television audio device 320, a crossbar 330 and a capture source 340 and so on at the Windows operating system. According to the channel chosen by a user, the television turner 310 decodes the television stream corresponding to the channel from the antenna or cable signals. The television audio device 320 is used to decode audio stream. The crossbar 330 is used to choose video interface which includes an AV terminal, an S-Video terminal or a TV terminal, and the video stream source which is chosen herein is TV terminal. At least, the video stream and audio stream are captured by the capture resource 340 and outputted to the back video input interface and audio input interface.

The digital television capture card is not the same with the analog capture card. FIG. 4 is a block diagram showing the digital television capture card of one preferred embodiment of the invention. Please refer to FIG. 4. The digital television capture card includes registering filters such as broadcast driver architecture (BDA) tuner 420 and BDA capture 430 and so on at the Windows operating system. In addition, two filters network provider 410 and demux 440 are provided by Windows operating system. The video decoder 450 and the audio decoder 460 for decoding are provided by the third part. The network provider 410 provides the resource of the digital television stream. The BDA turner 420 and BDA capture 430 are used to choose the channel of the digital television stream and capture digital television stream. The demux 440 is used to distribute the digital television stream to the video decoder 450 and the audio decoder 460 to decode, so that the needed video stream and audio stream can be obtained.

The television stream captured by the analog television capture and digital television card described above is transmitted to the virtual capturing unit 140 via the video input interface and audio input interface. After the virtual capturing unit 140 executes operating functions such as format converting, mixing and editing, the television stream is outputted to the instant communicating module 110 via the video output interface and the audio output interface. At last, the instant communicating module 110 can share the analog television stream or digital television stream with the remote device.

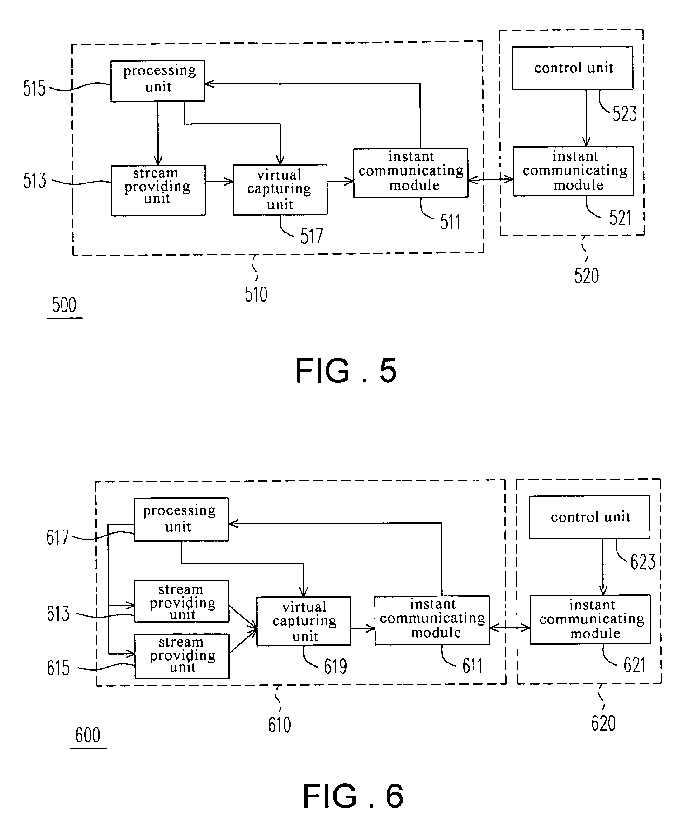

The invention provides the method for sharing various multimedia stream, and also provides a system for remotely processing multimedia stream. FIG. 5 is a system for remotely processing multimedia stream according to one preferred embodiment of the invention. Please refer to FIG. 5. The system for remotely processing multimedia stream 500 includes a stream operating device 510 and a remote device 520. The stream operating device 510 includes an instant communicating module 511, a stream providing unit 513, an processing unit 515 and a virtual capturing unit 517, while the remote device 520 includes an instant communicating module 521 and a control unit 523. Since the components (511~517) of the stream operating device 510 are same or similar with that of the device for remotely processing multimedia stream in the above embodiment, they are not described in detail herein.

In the invention, a communicating system is set up between the stream operating device 510 and the remote device 520 by the application programming interface (API) opened by the instant communicating modules 511 and 521. When the stream operating device 510 receives the operating commands transmitted by the remote device 520, it can control the stream operating device 510 to execute the corresponding operating function.

Please continue to refer to FIG. 5. The control unit 523 (such as a remote controller) is used to give an operating command to the remote device 520, while the instant communicating module 521 is used to establish a communicating connection with the instant communicating module 511 and transmits the operating command given by the control unit 523 to the instant communicating module 511 via the communicating connection. The communicating connection is established by the existing connection system between the instant communicating module 511 and instant communicating module 521. The transmitted operating command also utilizes a function provided by the instant communicating modules 511 and 512. Using this manner to transmit the operating command, the remote device 520 can transmit multimedia stream via the instant communicating module 511 without knowing or setting the Internet protocol (IP) of the stream operating device 510, which is convenient.

For example, when a user is not at home and wants to watch television, the user can utilize a notebook to connect with the personal computer at home via an instant communicating module. The remote controller is cooperated with the instant communicating module to give an operating command to the notebook, and then the user can remotely control the personal computer to share the television stream via the instant communicating module. In detail, if a user wants to remotely control the personal computer to execute the playing function, the user gives a playing command to the notebook via the remote controller, and the playing command is transmitted to the personal computer via the instant communicating module. According to the received playing command, the personal computer controls the television capture card to begin providing television stream and utilizes the virtual capturing unit 517 to convert the format of the television stream to the specific streaming format supported by the instant communicating module. At last, the television stream is transmitted to the notebook to play by the instant communicating module. In this way, a user can watch television outside.

In the invention, a plurality of operations of the stream providing unit are also supported, and operating functions such as format converting, mixing, editing and so on can be executed for the multimedia stream provided by different stream providing unit. FIG. 6 is a system for remotely processing multimedia stream according to another embodiment of the invention. Please refer to FIG. 6. In the embodiment, the system for remotely processing multimedia stream 600 includes a stream operating device 610 and a remote device 620. The stream operating device 610 includes an instant communicating module 611, stream providing units 613 and 615, an processing unit 617 and a virtual capturing unit 619, while the remote device 620 includes a instant communicating module 621 and a control unit 623. Compared with the prior embodiment, this embodiment has a stream providing unit 615, and other components of this embodiment are same or similar with that of the prior embodiment, and therefore, they are not described for concise purpose.

In this embodiment, the stream providing unit 613 and the stream providing unit 615 provides a sum of multimedia stream for the virtual capturing unit 619, respectively. The processing unit 617 controls the stream providing units 613 and 615 to execute operating functions such as playing, pausing, fast forwarding, turning round and so on according the operating command received by the instant communicating module 611, and it also controls the virtual capturing unit 619 to execute operating function such as format converting, mixing, or editing and so on for the two sums of the multimedia stream. After being processed, the multimedia stream is provided for the instant communicating module 611. At last, the remote device 620 receives and plays the multimedia stream.

For example, if the two sums of the multimedia stream provided by stream providing unit 613 and the stream providing unit 615, respectively, are ball match television steaming and album television steaming, the processing unit 617 can control the virtual capturing unit 619 to mix the television stream to be picture-in-picture (PIP), and only the mixed television stream is outputted. In this way, a user can watch two different televisions remotely.

To sum up, the device, system and method for remotely processing multimedia stream of the invention have at least following advantages:
1. first, since the virtual capturing unit is utilized to convert the format of the multimedia stream to a specific streaming format, the instant communicating module can recognize various multimedia stream, so that the resource of the multimedia stream is more plentiful;
2. second, utilizing the existing network connection function of the instant communicating module, a user can use the control unit to give an operating command remotely and control the stream operating device to provide multimedia stream, so that the effect of remote control is achieved.
3. third, since the virtual capturing unit is utilized to execute operating functions such as format converting, mixing, editing and so on, multimedia stream can be outputted after being combined or edited according to the need of the user to provide more various multimedia stream operating application.

Although the present invention has been described in considerable detail with reference to certain preferred embodiments thereof, the disclosure is not for limiting the scope of the invention. Persons having ordinary skill in the art may make various modifications and changes without departing from the scope and spirit of the invention. Therefore, the scope of the appended claims should not be limited to the description of the preferred embodiments described above.

## Claims

1. A device for remotely processing multimedia stream, comprising **characterized by**:
an instant communicating module which is suitable to establish a communicating connection with a remote device and receive an operating command transmitted by the remote device;
a first stream providing unit which is suitable to provide first multimedia stream;
an processing unit which controls the first stream providing unit to execute a first operating function according to the operating command; and
a virtual capturing unit which is suitable to convert the format of the first multimedia stream to a specific streaming format corresponding to the instant communicating module, and provide the converted first multimedia stream for the instant communicating module by which the converted first multimedia stream is outputted to the remote device.

2. The device for remotely processing multimedia stream according to claim 1, wherein the first operating function comprises one of functions of playing, pausing, fast forwarding and turning round of the first multimedia stream.

3. The device for remotely processing multimedia stream according to claim 1 further comprising:
a second stream providing unit which is suitable to provide second multimedia stream.

4. The device for remotely processing multimedia stream according to claim 3, wherein the processing unit further controls the virtual capturing unit to execute a second operating function for the first multimedia stream and the second multimedia stream.

5. The device for remotely processing multimedia stream according to claim 4, wherein the second operating function comprises one of functions of format converting, mixing and editing of the first multimedia stream and the second multimedia stream.

6. The device for remotely processing multimedia stream according to claim 1, wherein the first stream providing unit comprises a television capture card.

7. The device for remotely processing multimedia stream according to claim 1, wherein the first multimedia stream comprises one of digital television stream, analog television stream, video stream and audio stream.

8. The device for remotely processing multimedia stream according to claim 1, wherein the specific streaming format comprises defining one of image size, color and sampling rate of the first multimedia stream or the combination thereof.

9. A system for remotely processing multimedia stream, comprising **characterized by**:
a remote device which is suitable to transmit an operating command via a first instant communicating module; and
a stream operating device comprising:
a second instant communicating module which is suitable to establish a communicating connection with the first instant communicating module of the remote device and receive the operating command transmitted by the first instant communicating module of the remote device;
a first stream providing unit which is suitable to provide first multimedia stream;
an processing unit which controls the first stream providing unit to execute an operating function according to the operating command; and
a virtual capturing unit which is suitable to convert the format of the first multimedia stream to a specific streaming format corresponding to the second instant communicating module, and provide the converted first multimedia stream to the second instant communicating module by which the converted first multimedia stream is outputted to the remote device.

10. The system for remotely processing multimedia stream according to claim 9, wherein the remote device further comprises:
a control unit which is suitable to give the operating command to the remote device.

11. The system for remotely processing multimedia stream according to claim 9, wherein the first operating function comprises one of functions of playing, pausing, fast forwarding and turning round of the first multimedia stream.

12. The system for remotely processing multimedia stream according to claim 9, wherein the stream operating device further comprises:
a second stream providing unit which is suitable to provide second multimedia stream.

13. The system for remotely processing multimedia stream according to claim 12, wherein the processing unit further controls the virtual capturing unit to execute a second operating function for the first multimedia stream and the second multimedia stream, and the second operating function comprises one of functions of format converting, mixing and editing of the first multimedia stream and the second multimedia stream.

14. A method for remotely processing multimedia stream, comprising:
receiving an operating command transmitted by a remote device via an instant communicating module;
capturing first multimedia stream;
executing a first operating function for the first multimedia stream according to the operating command;
converting the format of the first multimedia stream to a specific streaming format corresponding to the instant communicating module; and
outputting the first multimedia stream whose format is converted to the remote device via the instant communicating module.

15. The method for remotely processing multimedia stream according to claim 14, before receiving the operating command transmitted by the remote device, further comprising:
establishing a communicating connection with the remote device via the instant communicating module.

16. The method for remotely processing multimedia stream according to claim 14, wherein the first operating function comprises one of functions of playing, pausing, fast forwarding and turning round of the first multimedia stream.

17. The method for remotely processing multimedia stream according to claim 14, further comprising:
receiving a second multimedia stream; and
executing a second operating function for the first multimedia stream and the second multimedia stream.

18. The method for remotely processing multimedia stream according to claim 17, wherein the second operating function comprises one of functions of format converting, mixing and editing of the first multimedia stream and the second multimedia stream.

19. The method for remotely processing multimedia stream according to claim 14, wherein the first multimedia stream comprises one of digital television stream, analog television stream, video stream and audio stream.

20. The method for remotely processing multimedia stream according to claim 14, wherein the specific streaming format comprises defining one of image size, color and sampling rate of the first multimedia stream or the combination thereof.
